# EUROPEAN PATENT SPECIFICATION

(11) **EP 3 742 098 B1**
(45) Date of publication and mention of the grant of the patent: **05.05.2021**
(21) Application number: 19175405.0
(22) Date of filing: 20.05.2019
(51) Int. Cl.: F28D 7/00, B29C 64/00, F28F 7/02

(54) **HEAT EXCHANGER**
WÄRMETAUSCHER
ÉCHANGEUR DE CHALEUR

(43) Date of publication of application: 25.11.2020
(73) Proprietor: C.R.F. Società Consortile per Azioni, 10043 Orbassano (Torino) (IT)
(72) Inventor: FERRARIS, Walter, 10043 Orbassano (Torino) (IT); SANDRI, Silvano, 10043 Orbassano (Torino) (IT); DI SCIULLO, Fausto, 10135 Torino (IT)
(74) Representative: Notaro, Giancarlo

(56) References cited:
- EP-A1- 3 073 219
- EP-A1- 3 205 966
- EP-A1- 3 228 971
- WO-A1-2016/057443
- US-A1- 2018 283 795
- US-A1- 2018 328 673
- US-B1- 9 976 815

## Description

### Field of the invention

The present invention relates to heat exchangers, in particular, but not exclusively, radiators for cooling systems of motor-vehicle engines, of the type comprising a plurality of tubes which extend between two heads of the heat exchanger, wherein said heads are associated to an inlet chamber and an outlet chamber which are in communication with each other, through said tubes, for passage of a first fluid, and in which said tubes define spaces therebetween for passage of a second fluid.

### Prior art

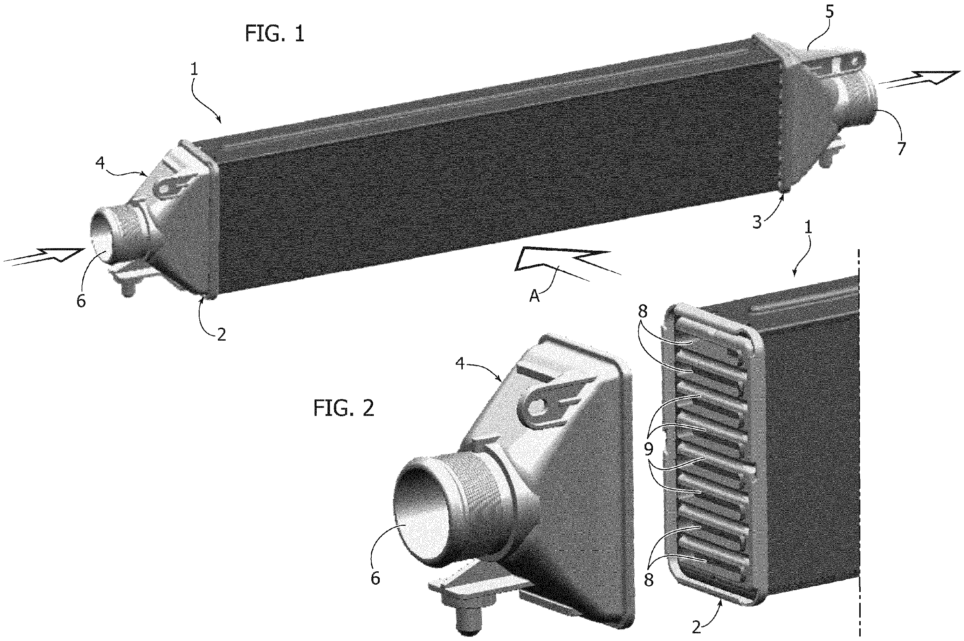

Figures 1, 2 show a conventional heat exchanger of the above indicated type. Figure 1 shows a perspective view of the heat exchanger in its entirety, whereas figure 2 shows an exploded perspective view, at an enlarged scale, of one end of the heat exchanger.

In figures 1, 2, numeral 1 generally designates a heat exchanger, specifically a radiator for the coolant of an internal combustion engine, comprising two end heads 2, 3 in the form of sheet metal plates, to which two casings 4, 5 are associated, for the inflow and the outflow of the engine coolant. The two casings 4, 5 respectively define an inlet 6 and an outlet 7 for the liquid to be cooled. Between the two end heads 2, 3 there extend a plurality of flat tubes 8 through which the two chambers associated to the end heads 2, 3 communicate with each other, for the inflow and the outflow of the coolant. As shown in figure 2, the flat tubes 8 are arranged superimposed on, and spaced apart from, each other, with their main faces facing each other, so as to define spaces 9 therebetween for passage of an air flow through the body of radiator 1 in a direction A orthogonal with respect to the longitudinal direction of the body of the radiator.

In order to increase the surface for heat exchange, the conventional art usually implies the provision of a plurality of auxiliary fins within the spaces 9 between the flat tubes 8.

The above described conventional art has the drawback of requiring manufacturing and assembling operations of the heat exchanger which are relatively complex and expensive. Furthermore, the conventional construction technique leaves a minimum degree of freedom to a designer in defining the general shape of the body of the heat exchanger and at any rate requires that the above mentioned auxiliary fins are used, with a resulting increase in cost and weight.

It has been already proposed to adopt non-conventional radiator structures by relying on additive manufacturing technology. Examples of these proposals are shown in documents WO 2018/160389 A1 and WO 2008/079679 A2. However, the known solutions of this type do not result to be fully satisfactory with regard to the efficiency of the heat exchange and further give rise to relatively heavy structures. A heat exchanger according to the preamble of claim 1 is known from US 9 976 815 B1. Similar heat exchangers are also known from WO 2016/057443 A1, US 2018/328673 A1, EP 3 205 966 A1 and US 2018/283795 A1. A heat exchanger with a curved configuration is known from EP 3 073 219 A1.

### Object of the invention

It is therefore an object of the present invention that of proposing a new configuration for a heat exchanger which dramatically simplifies the structure and the manufacturing process of the heat exchanger, while improving the efficiency of heat exchange, for a given total volume of the heat exchanger.

A further object of the invention is that of providing a heat exchanger having a structure which is lighter, for a given heat exchange efficiency, with respect to the known devices.

Still a further object of the invention is that of leaving the designer with a high degree of freedom in defining the general shape of the body of the heat exchanger.

### Summary of the invention

In view of achieving these and further objects, the invention provides a heat exchanger having the features of claim 1.

In the present description, and in the following claims, the term "additive manufacturing" is used to indicate a process, which is known per se in the art, in which a source of energy, such as a laser beam or plasma, is used for selectively melting layers of powders or wires of metal material or plastic material, of various dimensions, so as to form, layer after layer, a component of metal material or plastic material.

The above mentioned body defining the tubes of the heat exchanger may be constituted of metal material, such as aluminum, or plastic material, or plastic material with reinforcement fibers, such as graphene.

Due to the above indicated features, the heat exchanger according to the invention has a structure which is extremely simpler and lighter with respect to the conventional heat exchangers. In particular, the tortuous arrangement of the tubes of the heat exchanger provides a high surface for heat exchange between the first fluid and the second fluid, without requiring the provision of auxiliary components between the tubes, as in the case of conventional heat exchangers. The manufacturing and assembling operations of the heat exchanger are therefore dramatically simplified.

Furthermore, the arrangement of the tubes in the heat exchanger according to the invention enables a heat exchange which is much more efficient also with respect to the above mentioned known solutions of radiators made by additive manufacturing technology.

In the case of the present invention, the additive manufacturing technology is also used for providing the body of the heat exchanger with a non-conventional general shape. In the invention, the heat exchanger has an elongated and curved general configuration, so that it can be adapted to the shape of the front wall of the motor-vehicle, adjacent to which the heat exchanger must be mounted.

In the preferred embodiments, the tubes of the heat exchanger may be made with a cross-section of circular shape and a very small diameter with respect to the dimension of each tube as measured along its tortuous path. The ratio between the length of this path and the diameter of the tube may be in the order of several tens and is preferably greater than 50. Furthermore, the arrangement of the tubes is such that the "density" of the tubes, i.e. the ratio between the number of the tubes and the surface of the cross-section of the heat exchanger, is at least greater than 1,5 tubes/cm², and preferably greater than 2 tubes/cm², and even preferably greater than 4 tubes/cm².

### Detailed description of preferred embodiments

Further features and advantages of the invention will become apparent from the description which follows with reference to the annexed drawings, given purely by way of non-limiting example, in which:
- figures 1, 2 are a general perspective view and a partial and exploded perspective view of a heat exchanger according to the prior art,
- figures 3, 4 are two perspective views of a first embodiment of the heat exchanger according to the invention,
- figures 5, 6 are perspective views at an enlarged scale of details of figure 4,
- figure 7 is a plan view of the heat exchanger of figures 3, 4,
- figures 8, 9 are lateral views of further embodiments of the heat exchanger not forming part of the invention,
- figures 10, 11 are perspective views at an enlarged scale of details of the heat exchanger of figure 9, and
- figures 12-14 are perspective views of details of the body of the tubes of the heat exchanger, according to further embodiments not forming part of the present invention.

In the description which follows, various embodiments are illustrated of a heat exchanger to be applied as a radiator for the cooling system of an internal combustion engine of a motor-vehicle. It is however to be understood that the invention is applicable generally to any heat exchanger.

Figures 1, 2 show a heat exchanger according to the conventional art and have been discussed at the beginning of the present description.

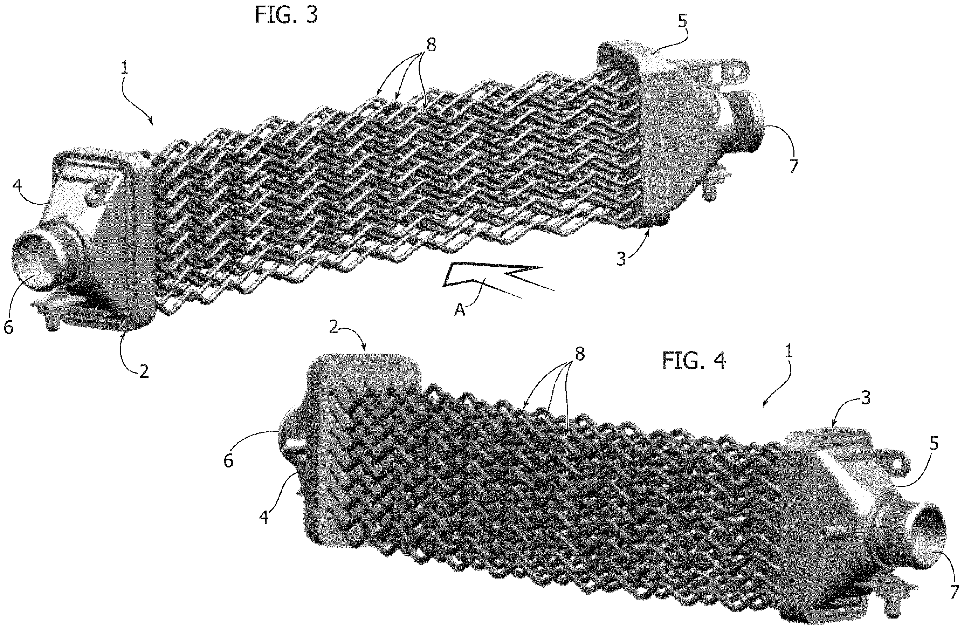

In figures 3-14, parts corresponding to those of figures 1, 2 are designated by the same reference numerals.

In the case of the embodiment of figures 3-7, the radiator 1 of the invention has a body in a single piece, formed by additive manufacturing technology, including a plurality of tubes 8, two opposite end heads 2, 3 between which tubes 8 extend, and two casings 4, 5 associated to the heads 2, 3 and defining and inlet chamber and an outlet chamber for the engine coolant.

The inlet and outlet chambers communicate with each other through tubes 8. Similarly to the conventional solution of figures 1, 2, the casings 4, 5 define an inlet 6 and an outlet 7 for the engine coolant.

As indicated in the foregoing, preferably the entire body of the heat exchanger is formed in one piece by additive manufacturing technology. It is however to be considered within the scope of the invention also the case in which only the plurality of tubes 8, or only the tubes 8 along with the two end heads 2, 3, is formed in a single piece by additive manufacturing technology.

As also already indicated in the foregoing, the additive manufacturing technology is a known technology, which makes use of an energy source, such as a laser beam or plasma, for selectively melting layers of powders or wires of metal material or plastic material, of various dimensions, so as to form, layer after layer, a component of metal material or plastic material. A device for making components by additive manufacturing technology is for example known from document EP 3 148 784 A1.

As shown in figures 3, 4, tubes 8 of the heat exchanger each extend along a tortuous path, in order to increase the surface for heat exchange between the first fluid and the second fluid, without requiring the provision of auxiliary fins within the spaces between the tubes.

As also visible in figures 3, 4, the tubes 8 have a circular cross-section and have a very reduced diameter with respect to the tube dimension, as measured along the respective tortuous path. The ratio between this length and the diameter of the tube is preferably greater than 50. As a result, the heat exchanger has a relatively high tube density, meaning that the ratio between the number of the tubes and the surface of the cross-section of the heat exchanger may be greater than 1,5 tubes/cm² and preferably greater than 2 tubes/cm² and even more preferably greater than 4 tubes/cm².

In the case of the embodiment shown in figures 3-7, the tubes each extend along a sinusoidal path and are arranged in rows and columns, according to a matrix configuration, so that the sinusoidal paths of different tubes are all lying in surfaces which are parallel to, and spaced apart from, each other, said surfaces being substantially orthogonal to the general direction A of the flow of the second fluid through the heat exchanger.

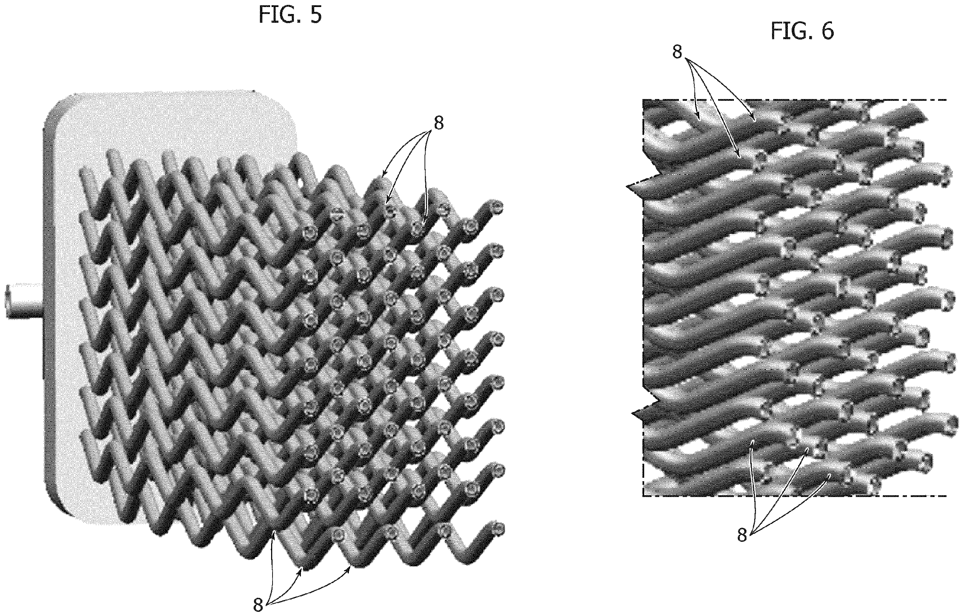

Figures 5, 6 show details of the matrix arrangement of the sinusoidal tubes 8. Thanks to adopting the additive manufacturing technology, the above-described arrangement of the tubes of the heat exchanger may be obtained with no difficulty and at low cost. By using this technology it is also possible to provide the body of the heat exchanger with a desired general configuration, which can be different from that of the conventionally heat exchangers.

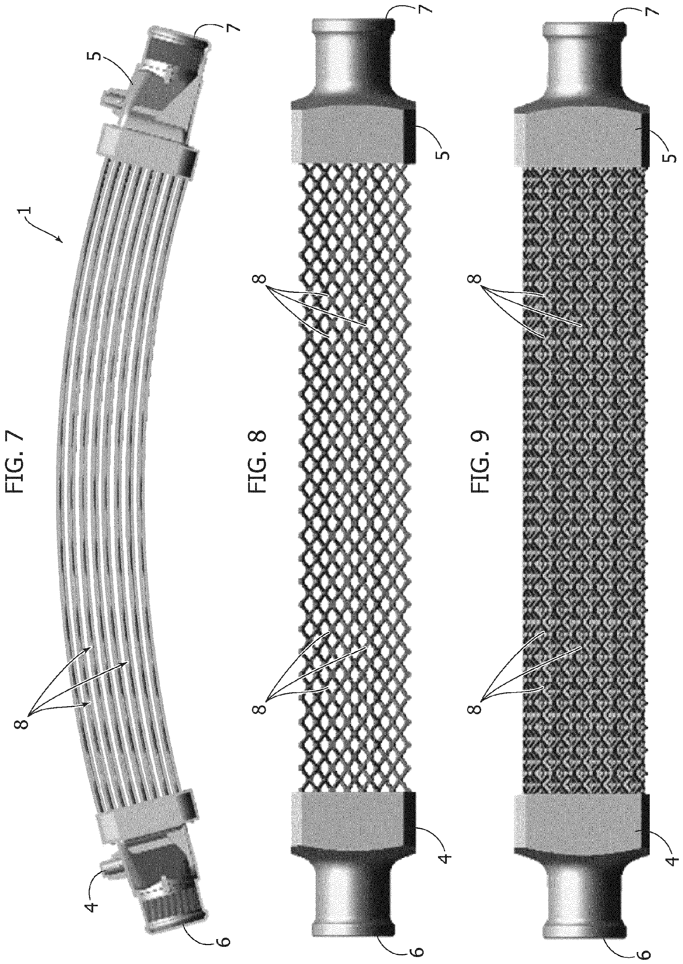

For example, in the case of the embodiment shown in figures 3-7, the body of the heat exchanger, when seen in plan view (see figure 7) has an elongated and curved configuration, with tubes 8 which are arranged superimposed upon each other in a plurality of curved surfaces which are parallel to, and spaced apart from, each other. In this manner, the heat exchanger may be mounted adjacent to a front wall of the motor-vehicle, since it has a shape adapted to the configuration of this wall, thereby exploiting the space available within the engine compartment in the best possible manner.

Figure 8 shows a second embodiment not forming part of the invention in which tubes 8 are arranged so as to define a three-dimensional net, in which all the tubes are in communication, or not in communication with each other, depending upon which configuration is desired.

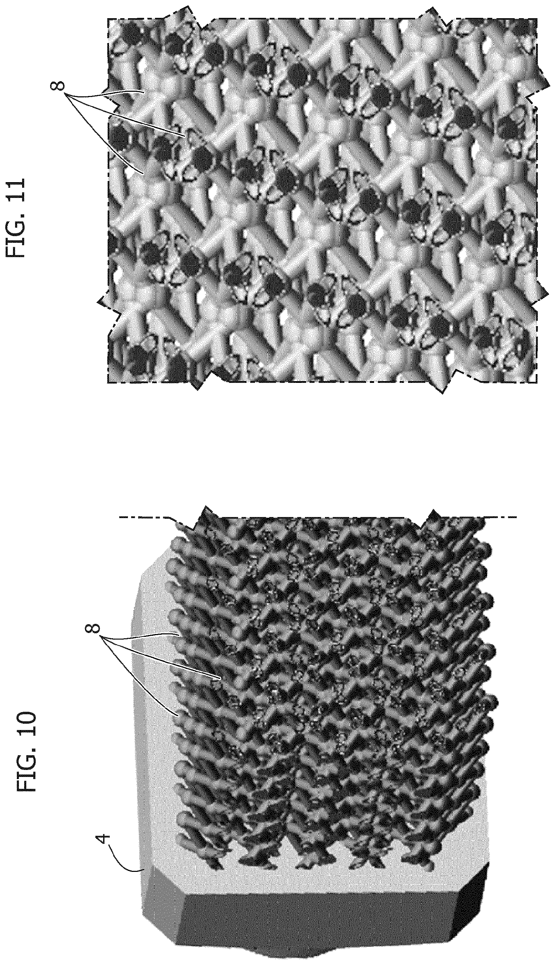

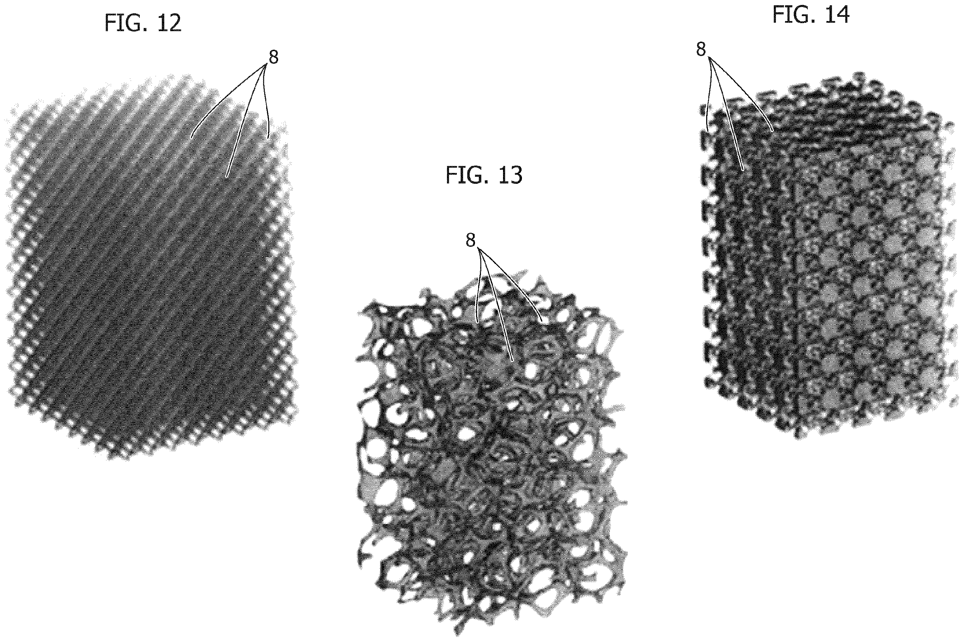

Arrangements of the tubes according to three-dimensional nets are also obtained in the embodiments (not forming part of the invention) shown in figure 9 (to which the details of figures 10, 11 relate) and in figures 12-14, which show only details of the arrangement of the tubes.

Figure 13 shows a tangled or "chaotic" arrangement of the tubes 8.

All the above indicated embodiments have the advantage of having a very high number of tubes for surface unit of the cross-section of the heat exchanger and therefore they have a very high value of the surface of a heat exchange between the first fluid in the second fluid, for a given volume of the heat exchanger. As it will become readily apparent from the foregoing description, the heat exchanger according to the invention has the advantage of being simpler and lighter with respect to conventional heat exchangers, requires less troublesome manufacturing and assembling operations and also has the advantage of providing a more efficient heat exchange, for a given volume of the body of the heat exchanger. A further advantage of the heat exchanger according to the invention is that of leaving the designers with a much higher degree of freedom, with reference in particular to the general shape of the body of the heat exchanger.

Naturally, while the principle of the invention remains the same, the details of construction and the embodiments may widely vary with respect to what has been described and illustrated purely by way of example, without departing from the scope of the present invention, as defined in the annexed claims.

## Claims

1. Heat exchanger, in particular radiator for cooling systems of motor-vehicle engines, the heat exchanger comprising a plurality of tubes (8) which extend between two heads (2, 3) of the heat exchanger, wherein said heads (2, 3) are associated to an inlet chamber and an outlet chamber which are in communication with each other through said tubes (8), for the passage of a first fluid, and wherein said tubes (8) define therebetween spaces for passage of a second fluid,
wherein the plurality of all said tubes (8) is defined by a single body in a single piece made by additive manufacturing technology, and in that said tubes (8) each extend along a tortuous path, so as to increase the surface for heat exchange between the first fluid and the second fluid, without requiring the provision of auxiliary fins within the spaces between the tubes (8),
wherein said tubes (8) each have a sinusoidal configuration and are arranged in rows and columns, according to a matrix arrangement,
wherein all the tubes (8) have their sinusoidal configurations lying in surfaces which are parallel to, and spaced apart from, each other, said surfaces being substantially orthogonal to the direction (A) of flow of the second fluid through the heat exchanger,
wherein the two heads (2, 3) of the heat exchanger are formed in a single piece with said tubes (8), by additive manufacturing technology, **characterized in that** said inlet and outlet chambers for the first fluid are defined by two casings (4, 5) formed in a single piece with said heads (2, 3) and said tubes (8) by additive manufacturing technology, wherein the body defining the plurality of tubes (8) has an elongated and curved general configuration, so that it can be adapted to the shape of a front wall of a motor-vehicle, adjacent to which the heat exchanger is to be mounted, and wherein said tubes (8) are arranged superimposed upon each other in a plurality of curved surfaces which are parallel to, and spaced apart from, each other.

2. Heat exchanger according to claim 1, **characterized in that** the body of said tubes (8) is constituted by a material chosen among metal material, such as aluminum, plastic material, plastic material filled with reinforcement fibers, such as graphene.

3. Heat exchanger according to claim 1, **characterized in that** the heat exchanger has a tube density, measured as a ratio between the number of tubes of the heat exchanger and the surface of the cross-section of the heat exchanger, which is at least greater than 1,5 tubes/cm².

4. Heat exchanger according to claim 3, **characterized in that** the heat exchanger has a tube density, measured as a ratio between the number of tubes of the heat exchanger and the surface of the cross-section of the heat exchanger, which is greater than 2 tubes/cm²

5. Heat exchanger according to claim 4, **characterized in that** the heat exchanger has a tube density, measured as a ratio between the number of tubes of the heat exchanger and the surface of the cross-section of the heat exchanger, which is greater than 4 tubes/cm².

## Patentansprüche

1. Wärmetauscher, insbesondere Kühler für Kühlsysteme von Kraftfahrzeugmotoren, wobei der Wärmetauscher eine Vielzahl von Rohren (8) umfasst,
die sich zwischen zwei Köpfen (2, 3) des Wärmetauschers erstrecken, wobei die Köpfe (2, 3) mit einer Einlasskammer und einer Auslasskammer verbunden sind, die durch die Rohre (8) miteinander in Verbindung stehen,
zum Durchgang eines ersten Fluids, und wobei die Rohre (8) dazwischen Räume zum Durchgang eines zweiten Fluids bilden,
wobei die Vielzahl aller Rohre (8) durch einen einzelnen Aufbau in einem durch zusätzliche Herstellungstechnologie hergestellten Einzelstück festgelegt sind, und dadurch, dass die Rohre (8) sich jeweils entlang eines gewundenen Weges erstrecken, um die Oberfläche zum Wärmeaustausch zwischen dem ersten Fluid und dem zweiten Fluid zu vergrößern, ohne dass die Beistellung von zusätzlichen Lamellen im Innern der Räume zwischen den Rohren (8) benötigt wird,
wobei die Rohre (8) jeweils eine sinusförmige Anordnung aufweisen und in Reihen und Spalten, entsprechend einer Matrixanordnung, eingerichtet sind,
wobei die sinusförmigen Anordnungen aller Rohre (8) in Flächen liegen, die parallel zueinander und im Abstand voneinander angeordnet sind, wobei die Flächen im Wesentlichen orthogonal zur Strömungsrichtung (A) des zweiten Fluid durch den Wärmetauscher liegen,
wobei die zwei Köpfe (2, 3) des Wärmetauschers in einem Einzelstück mit den Rohren (8) durch zusätzliche Herstellungstechnologie gebildet sind,
**dadurch gekennzeichnet, dass**
die Einlasskammer und die Auslasskammer für das erste Fluid durch zwei Gehäuse (4, 5) festgelegt sind, die in einem Einzelstück mit den Köpfen (2, 3) und den Rohren (8) durch zusätzliche Herstellungstechnologie gebildet sind,
wobei der die Vielzahl von Rohren (8) bestimmende Aufbau eine längliche und gewölbte allgemeine Gestalt aufweist, so dass er an die Form einer Stirnwand eines Kraftfahrzeugs angepasst werden kann, an die angrenzend der Wärmetauscher einzubauen ist, und
wobei die Rohre (8) aufeinander in einer Vielzahl von gewölbten Flächen überlagert eingerichtet sind, die parallel zueinander und im Abstand voneinander angeordnet sind.

2. Wärmetauscher nach Anspruch 1, **dadurch gekennzeichnet, dass** der Aufbau der Rohre (8) durch ein Material gebildet ist, das ausgewählt wird zwischen Metallwerkstoff wie Aluminium, Kunststoff, mit Verstärkungsfasern wie Graphen gefülltem Kunststoff.

3. Wärmetauscher nach Anspruch 1, **dadurch gekennzeichnet, dass** der Wärmetauscher eine Rohrdichte aufweist, die als ein Verhältnis zwischen der Anzahl von Rohren des Wärmetauschers und der Fläche des Querschnitts des Wärmetauschers gemessen wird, welches zumindest größer als 1,5 Rohre/cm² ist.

4. Wärmetauscher nach Anspruch 3, **dadurch gekennzeichnet, dass** der Wärmetauscher eine Rohrdichte aufweist, die als ein Verhältnis zwischen der Anzahl von Rohren des Wärmetauschers und der Fläche des Querschnitts des Wärmetauschers gemessen wird, welches größer als 2 Rohre/cm² ist.

5. Wärmetauscher nach Anspruch 4, **dadurch gekennzeichnet, dass** der Wärmetauscher eine Rohrdichte aufweist, die als ein Verhältnis zwischen der Anzahl von Rohren des Wärmetauschers und der Fläche des Querschnitts des Wärmetauschers gemessen wird, welches größer als 4 Rohre/cm² ist.

## Revendications

1. Échangeur de chaleur, en particulier radiateur pour systèmes de refroidissement de moteurs de véhicule automobile, l'échangeur de chaleur comprenant une pluralité de tubes (8) qui s'étendent entre deux têtes (2, 3) de l'échangeur de chaleur, où lesdites têtes (2, 3) sont associées à une chambre d'entrée et à une chambre de sortie qui sont en communication l'une avec l'autre à travers lesdits tubes (8), pour le passage d'un premier fluide, et où lesdits tubes (8) définissent entre eux des espaces pour le passage d'un deuxième fluide,
dans lequel la pluralité de tous lesdits tubes (8) est définie par un seul corps en une seule pièce réalisé par la technologie de fabrication additive, et en ce que lesdits tubes (8) s'étendent chacun le long d'un trajet tortueux, de manière à augmenter la surface d'échange de chaleur entre le premier fluide et le deuxième fluide, sans qu'il soit nécessaire de fournir des ailettes auxiliaires à l'intérieur des espaces entre les tubes (8),
dans lequel lesdits tubes (8) ont chacun une configuration sinusoïdale et sont agencés en lignes et colonnes, selon un agencement matriciel,
dans lequel tous les tubes (8) ont leurs configurations sinusoïdales situées dans des surfaces qui sont parallèles les unes aux autres, et espacées les unes des autres, lesdites surfaces étant sensiblement orthogonales à la direction (A) d'écoulement du deuxième fluide à travers l'échangeur de chaleur,
dans lequel les deux têtes (2, 3) de l'échangeur de chaleur sont formées en une seule pièce avec lesdits tubes (8), par la technologie de fabrication additive,
**caractérisé en ce que**
lesdites chambres d'entrée et de sortie pour le premier fluide sont définies par deux boîtiers (4, 5) formés en une seule pièce avec lesdites têtes (2, 3) et lesdits tubes (8) par la technologie de fabrication additive,
dans lequel le corps définissant la pluralité de tubes (8) a une configuration générale allongée et incurvée, de sorte qu'il puisse être adapté à la forme d'une paroi avant d'un véhicule automobile, à côté de laquelle l'échangeur de chaleur doit être monté, et
dans lequel
lesdits tubes (8) sont agencés superposés les uns sur les autres dans une pluralité de surfaces incurvées qui sont parallèles les unes aux autres, et espacées les unes des autres.

2. Échangeur de chaleur selon la revendication 1, **caractérisé en ce que** le corps desdits tubes (8) est constitué d'un matériau choisi parmi un matériau métallique, tel que l'aluminium, un matériau plastique, un matériau plastique chargé de fibres de renforcement, tel que le graphène.

3. Échangeur de chaleur selon la revendication 1, **caractérisé en ce que** l'échangeur de chaleur a une densité de tubes, mesurée comme un rapport entre le nombre de tubes de l'échangeur de chaleur et la surface de la section transversale de l'échangeur de chaleur, qui est au moins supérieure à 1,5 tubes/cm².

4. Échangeur de chaleur selon la revendication 3, **caractérisé en ce que** l'échangeur de chaleur a une densité de tubes, mesurée comme un rapport entre le nombre de tubes de l'échangeur de chaleur et la surface de la section transversale de l'échangeur de chaleur, qui est supérieure à 2 tubes/cm².

5. Échangeur de chaleur selon la revendication 4, **caractérisé en ce que** l'échangeur de chaleur a une densité de tubes, mesurée comme un rapport entre le nombre de tubes de l'échangeur de chaleur et la surface de la section transversale de l'échangeur de chaleur, qui est supérieure à 4 tubes/cm².
